# EUROPÄISCHE PATENTSCHRIFT

(11) **EP 1 232 708 B1**
(45) Veröffentlichungstag und Bekanntmachung des Hinweises auf die Patenterteilung: **30.11.2005**
(21) Anmeldenummer: 02001297.7
(22) Anmeldetag: 18.01.2002
(51) Int. Cl.: A47G 1/17, F16B 47/00, F16B 45/00

(54) **Zumindest zweiteiliger Haken**
Hook with at least two parts
Crochet avec au moins deux pieces

(30) Priorität: 14.02.2001 DE 10107422
(43) Veröffentlichungstag der Anmeldung: 21.08.2002
(73) Patentinhaber: tesa AG, 20253 Hamburg (DE)
(72) Erfinder: Reiss-Schmidt, Tobias, 20359 Hamburg (DE); Franck, Achim, 20259 Hamburg (DE); Koop, Norbert, 22301 Hamburg (DE)

(56) Entgegenhaltungen:
- EP-A- 0 916 294
- WO-A-94/21157
- DE-A- 19 735 228
- DE-C- 19 641 118

## Beschreibung

Die Erfindung betrifft einen zumindest zweiteiligen Haken, insbesondere Wandhaken, der mittels auf Zug entklebende Klebstreifen reversibel verklebbar und wiederverwendbar ist, gegebenenfalls mit einem neuen solchen Klebstreifen.

Auf Zug entklebende Klebstreifen sind als "tesa Power-Strips" von der Beiersdorf AG im Handel und auch durch zahlreiche Patente beschrieben, wie DE 33 31 016 B1, DE 42 22 849 B1, DE 43 39 604 B1, DE 44 28 587 B1 und DE 44 31 914 B1. Aber auch US 4.024.312, WO92/11332 A1, WO92/11333 A1 und WO95/06691 A1 beschreiben derartige Klebstreifen. Aus der Verklebung werden solche Klebstreifen in Richtung der Klebfuge herausgezogen, ähnlich dem Öffnen eines Weckglases.

So beschreibt US 4,024,312 ein Selbstklebeband mit einem dehnbaren und elastischen Träger aus einem Blockcopolymeren, insbesondere für Anwendungen im medizinischen Bereich, wo ein schmerzloses Abziehen von der Haut erwünscht ist.

Weiterhin beschreibt DE 33 31 016 A1 eine Klebfolie für wiederlösbare Klebbindungen, die es gestattet, daß eine damit hergestellte Klebbindung durch Ziehen an der Klebfolie in Richtung der Verklebungsebene lösbar ist. Mit solchen Klebfolie lassen sich hohe Klebkräfte und Scherfestigkeiten erzielen und Klebverbunde ohne weitere Hilfsmittel wieder lösen, vergleichbar dem Öffnen eines Weckglases, ähnlich wie dort die Gummidichtung am Anfasser aus der Dichtungsfuge gezogen wird.

Ferner beschreibt DE 37 14 453 C1 einen zerstörungsfrei von Übungsobjekten wieder abnehmbaren Übungssprengkörper, der mit solch einer Klebfolie reversibel befestigt wird.

Auch WO 92/11333 A1 beschreibt unter anderem Klebfolien für entsprechende Anwendungen, wobei die eingesetzten Klebfolien eine geringe Elastizität bei gleichzeitig hoher Dehnung aufweisen.

DE 42 22 849 C1 beschreibt ebenfalls einen Streifen einer Klebfolie dieser Art mit einem besonders ausgestalteten Anfasser.

Auch Haken oder ähnliche Befestigungssysteme für die Verwendung zusammen mit solchen Klebstreifen sind im Handel als "tesa Power-Strips mit Haken" oder auch "tesa Power-Strips Systemhaken" von der Beiersdorf AG erhältlich.

Schließlich beschreiben DE 42 33 872 C2, DE 195 11 288 B1 und WO 94/21157 A1 wiederablösbare selbstklebende Haken, die ebenfalls mit derartigen Klebfolien ausgerüstet und also wiederablösbar sind.

So dann zeigt die DE 196 41 118 C1 einen wiederablösbaren, selbstklebenden Haken oder dergleichen Befestigungsvorrichtung mit einer Grundplatte, gekennzeichnet durch einen Streifen einer beidseitig klebenden Klebfolie, die eine solche ist, daß die mit ihr erzielte Verklebung durch streckendes Ziehen wieder lösbar ist. Die Folie trägt auf ihrer vorderen Seite die Grundplatte und ist mit der hinteren Seite auf einem Untergrund verklebt ist, wobei die Trennung der verklebten Grundplatte der Befestigungsvorrichtung samt des Streifens vom Untergrund durch Drehen der Grundplatte im wesentlichen in der Verklebungsebene erfolgt.

Die DE 197 35 228 A1 offenbart einen Haken, bestehend aus einem einteiligen Hakenkörper und einer einteiligen Basisplatte, wobei die Basisplatte für die Verklebung mit einem auf Zug entklebenden Klebstreifen so ausgebildet ist, daß ein Anfasser des Klebstreifens die Basisplatte überragt, wobei der Hakenkörper so ausgebildet ist, daß er die Basisplatte und auch den diese überragenden Anfasser verdeckt.
An der Basisplatte ist eine Ausformung vorhanden ist, in der zumindest ein Federelement befestigt ist und die im Kragenbereich einen Vorsprung aufweist. In dem Hakenkörper sind Führungen ausgebildet, in denen der Vorsprung der Ausformung der Basisplatte so geführt wird, daß
- der Hakenkörper und die Basisplatte unlösbar miteinander verbunden sind,
- sich der Hakenkörper durch eine Bewegung parallel zur Basisplatte aus der Grundstellung, in der Hakenkörper auf der Basisplatte verankert ist und dabei Basisplatte und Anfasser des Klebstreifens verdeckt, löst und parallel zur Basisplatte verschoben wird und
- der Hakenkörper über dem Federelement um bis zu 90° gedreht werden kann, so daß
- ein Zugriff auf den Anfasser möglich ist.

DE 197 35 229 A1 zeigt einen Haken, bestehend aus einem einteiligen Hakenkörper und zumindest einem einteiligen Scharnierelement und einer einteiligen Basisplatte, wobei die Basisplatte für die Verklebung mit einem auf Zug entklebenden Klebstreifen so ausgebildet ist, daß ein Anfasser des Klebstreifens die Basisplatte überragt. Das Scharnierelement ist so ausgebildet, daß der am Klebstreifen befindliche Anfasser abgedeckt ist.
Der Hakenkörper ist so ausgebildet, daß er die Basisplatte und das Scharnierelement, die beide in einer Ebene angeordnet sind, verdeckt, wobei
- die Basisplatte und das Scharnierelement über ein Scharnier, insbesondere Filmscharnier, miteinander verbunden sind,
- das Scharnierelement und der Hakenkörper über ein Scharnier miteinander verbunden sind, und wobei
- der Hakenkörper an der am Scharnierelement angrenzenden Seite aus der Grundstellung, in der Hakenkörper auf der Basisplatte verankert ist und dabei Basisplatte und Scharnierelement des Klebstreifens verdeckt, nach oben angehoben werden kann und durch eine Bewegung parallel zur Basisplatte verschoben wird, so daß ein Zugriff auf den Anfasser möglich ist.

Aus der DE 197 35 234 A1 ist ein Haken bekannt, bestehend aus einem einteiligen Hakenkörper und einer einteiligen Basisplatte, wobei die Basisplatte für die Verklebung mit einem auf Zug entklebenden Klebstreifen so ausgebildet ist, daß ein Anfasser des Klebstreifens die Basisplatte überragt, wobei der Hakenkörper so ausgebildet ist, daß er die Basisplatte und auch den diese überragenden Anfasser verdeckt.
An der Basisplatte sind zumindest vier Ausweitungen angeformt, die sich jeweils paarweise gegenüberliegen und die die Basisplatte seitlich überragen. In dem Hakenkörper sind Führungen ausgebildet, in denen die Ausweitungen der Basisplatte so geführt werden, daß
- sich der Hakenkörper durch eine Bewegung parallel zur Basisplatte aus der Grundstellung, in der Hakenkörper auf der Basisplatte verankert ist und dabei Basisplatte und Anfasser des Klebstreifens verdeckt, löst und sich dabei zumindest auf der einen Seite von dem Untergrund abhebt, so daß
- ein Zugriff auf den Anfasser möglich ist,
- der Hakenkörper und die Basisplatte unlösbar miteinander verbunden sind.

Die in den vorgenannten Druckschriften dargestellten Klebstoffsysteme und Haken weisen jedoch auch eine Anzahl von Nachteilen auf:

Keiner der bekannten Haken ist zwei- oder mehrteilig unter Verwendung einer Blende aufgebaut. Wenn man den optischen Eindruck des jeweils verklebten Hakens verändern möchte, ist man gezwungen, diesen Haken gegen einen anderen auszutauschen, der die gewünschte Form aufweist. Man muß immer den entsprechenden Haken erwerben.

Weiter nachteilig ist, daß der auszutauschende Haken von der Wand entfernt und anschließend der neue Haken erneut verklebt werden muß, ein Vorgang, der als lästig und zeitraubend empfunden wird.

Auch in der Produktion sind die herkömmlichen Haken mit Nachteilen belegt. So muß bisher bei kleinsten Änderungen im Hakendesign das gesamte Werkzeug neu erstellt werden.

Aus der EP 0 916 294 A1 ist ein zweiteiliger Haken aus einer Adapterplatte und aus einer auf die Adapterplatte aufgesteckten Blende bekannt. Die Blende deckt die Adapterplatte vollständig ab. Der Hakenkörper befindet sich auf der Blende.
Die Adapterplatte wird mit Kleber auf dem Untergrund verklebt, dann die Blende auf die Adapterplatte aufgesteckt.

Aufgabe der Erfindung ist es, hier Abhilfe zu schaffen, insbesondere einen Haken oder dergleichen zu schaffen, der die Nachteile des Standes der Technik nicht oder zumindest nicht in dem Maße aufweist und der insbesondere als Wandhaken einsetzbar ist.

Demgemäß betrifft die Erfindung einen Haken, wie er im einzelnen in den Ansprüchen gekennzeichnet ist. Die Ausführungsformen gemäß den Unteransprüchen sind dabei bevorzugt.

Der erfindungsgemäße zumindest zweiteilige Haken setzt sich zusammen aus einer Adapterplatte, die für die Verklebung mit einem auf Zug entklebenden Streifen einer beidseitig klebenden Klebfolie so ausgebildet ist, daß ein Anfasser des Klebstreifens die Adapterplatte überragt, und einem auf der Adapterplatte befindlichen Hakenkörper, der auf der Adapterplatte angesetzt ist. Auf die Adapterplatte ist eine Blende aufgesteckt, die die Adapterplatte zumindest abschnittsweise abdeckt.

In einer ersten vorteilhaften Ausführungsform des zumindest zweiteiligen Haken deckt die Blende die gesamte Adapterplatte und/oder den Anfasser des Klebstreifens ab. Besonders bevorzugt ist darüber hinaus, wenn die Blende die Adapterplatte an allen Rändern überkragt, so daß von der Adapterplatte lediglich der Hakenkörper zu sehen ist, wenn sich die Blende darüber befindet.

Weiter vorzugsweise ist auf der Blende ein zweiter Hakenkörper vorhanden, der sich insbesondere mit dem Hakenkörper auf der Adapterplatte zu einem einzigen Haken ergänzt. Die beiden Hakenkörper können dabei formschlüssig aneinanderliegen.

Die Adapterplatte und/oder die Blende sind weiter vorzugsweise aus Glas, Metall oder Kunststoff, vorzugsweise Polyethylenterephthalat, Polystyrol oder ABS, gefertigt.
Die Dicke der Adapterplatte und/oder der Blende liegen vorzugsweise zwischen 0,8 und 2,2 mm, insbesondere zwischen 1 und 2 mm, wobei sich ein Wert von 1,5 mm als besonders vorteilhaft erwiesen hat.
Sodann sind die Adapterplatte und/oder die Blende insbesondere transparent.
In einer weiteren vorteilhaften Ausführungsform sind die Adapterplatte und die Blende unlösbar miteinander verbunden.

Schließlich kann der Haken einen hinter die Adapterplatte geklebten Klebstreifen aufweisen.

Der Klebestreifen ist vorteilhaft beidseitig selbstklebend ausgerüstet.

Weiterhin bevorzugt besteht der Klebestreifen aus einem hochverstreckbaren, elastisch oder plastisch unter Dehnung verformbaren Material, gegebenenfalls mit einem Zwischenträger, insbesondere mit einem Folien- oder Schaumstoff-Zwischenträger.
Die Adhäsion der Klebfolie sollte geringer sein als die Kohäsion, das Haftvermögen beim Dehnen der Folie weitgehend verschwinden und das Verhältnis von Abzugskraft zu Reißlast mindestens 1 : 1,5 sein.
Vorzugsweise ist der Klebestreifen ein solcher auf Basis von thermoplastischem Kautschuk und klebrigmachenden Harzen ist, mit hoher Elastizität und geringer Plastizität.
Die Klebestreifen können einseitig oder beidseitig haftklebrig oder auch einseitig oder beidseitig mit einer thermisch aktivierbaren Klebmasse ausgerüstet sein. Ihr Aufbau kann einschichtig oder mehrschichtig ausgeführt sein. Im Falle beidseitig haftklebriger Selbstklebebänder können als Zwischenträger elastisch oder plastisch deformierende Materialien genutzt werden. Hierin eingeschlossen sind neben Kunststoffolien insbesondere Klebmassen als Zwischenschichten und schaumstoffhaltige Zwischenträger. In einer bevorzugten Ausführungsform weist die Klebfolie einen Zwischenträger auf, der beidseitig mit einer Acrylatkleberbeschichtung versehen ist.

Des weiteren umfaßt der Erfindungsgedanke eine Kombination aus einem zumindest zweiteiligen Haken und einem Klebstreifen, der insbesondere ein auf Zug entklebender Streifen einer beidseitig klebenden Klebfolie sein kann.

Besonders vorteilhaft läßt sich der Haken verwenden, wenn die Adapterplatte so ausgeformt ist, daß diese auf eine Basisplatte aufgesteckt werden kann, wobei die Basisplatte durch den Klebestreifen mit der Wand verklebt ist. Beispielsweise sind diese Basisplatten im Handel erhältlich, u.a. als Klebehaken mit modularem Aufbau (tesa Power-Strips Systemhaken), bestehend aus einer Basisplatte auf die ein Hakenkörper adaptiert wird.
Über diese Basisplatten lassen sich dabei Formkörper verschiedenster Ausformungen adaptieren, welche eine große Variationsbreite der Anwendungen ermöglichen. Beispiele umfassen Adapter für die Fixierung von Kabeln, Spiegeln, Bildern etc.

Die Basisplatte besteht aus einer Platte, deren Seiten und/oder Vorderseite gegebenenfalls Mittel zur Befestigung an der Adapterplatte aufweisen und deren Rückseite mit einem Streifen einer vorzugsweise beidseitig klebenden Klebfolie derart auf dem Untergrund aufgeklebt wird, daß ein Ende der Klebfolie als Anfasser die Platte überragt, wobei die Klebfolie eine solche ist, daß die mit ihr erzielte Verklebung durch den Streifen streckendes Ziehen wieder lösbar ist. Bevorzugt hat die Platte an ihrem Ende bzw. ihrer Rückseite zumindest in dem Bereich, der dem Anfasser des Klebfolien-Streifens anliegt, gegenüber dem Klebfolien-Streifen eine geringe Haft- und Gleitreibung.

Bevorzugt ist ferner, wenn der Bereich, der dem Anfasser anliegt, eine niederenergetische Oberfläche aufweist, und zwar auf Basis von fluorhaltigen Polymeren, siliziumorganischen Polymeren, Polyolefinen oder auf Basis von Polymeren, welche fluorhaltige Segmente, Segmente aus siliziumorganischen Polymeren oder Polyolefinsegmente enthalten oder solche auf Basis eines Gemisches vorgenannter Polymere ggf. mit weiteren Polymeren.

Bevorzugt ist ferner, wenn der Bereich, der dem Anfasser anliegt, eine Oberflächenspannung von bis zu 37 mN/m aufweist.

Bevorzugt ist ferner, wenn der Bereich, der dem Anfasser anliegt, zusammen mit der Platte als integriertes Spritzgußteil aus Kunststoff ausgebildet ist.

Bevorzugt ist ferner, wenn die Platte an ihrer Rückseite seitlich, oben und/oder unten neben dem aufgeklebten Klebfolien-Streifen Abstandshalter aufweist, deren Höhe geringer als die Dicke des Klebfolien-Streifens ist.

Bevorzugt ist ferner, wenn sich die Abstandshalter zu beiden Seiten neben dem aufgeklebten Klebfolien-Streifen befinden.

Bevorzugt ist ferner, wenn die Abstandshalter als Stege oder Segmente ausgebildet sind.

Bevorzugt ist ferner, wenn die Abstandshalter als Spritzgußteil zusammen mit der Platte ausgebildet sind.

Bevorzugt ist ferner, wenn die Abstandshalter 30 bis 90 % der Dicke des aufgeklebten Klebfolien-Streifens beträgt, bei einer Dicke des Klebfolien-Streifens von 0,65 mm, insbesondere 0,3 bis 0,6 mm.

Vorteilhaft ist die Höhe der Abstandshalter so gewählt, daß diese geringer ist als die Dicke der Klebstoff-Folie (unverstreckt), so daß eine einwandfreie Verklebung mit dem Haftgrund möglich ist. Durch die beim Ablösevorgang auftretende Dehnung der Klebstoff-Folie verjüngt sich selbige in Breite und Dicke entsprechend. Ist die beim Ablösen erreichte Dicke der Klebstoff-Folie niedriger als die Höhe der Abstandshalter, so ist ein reißerfreies Ablösen der Klebstoff-Folie auch dann möglich, wenn gleichzeitig hohe Anpreßdrucke vertikal zur Verklebung auftreten, welche sonst zu einem Reißen des Klebebandes geführt hätten.

Durch Einsatz von Platten, welche anfasserseitig im Kantenbereich der Verklebung ein Material enthalten, welches möglichst niedrige Haft- und niedrige Gleitreibungskoeffizienten zur jeweils eingesetzten Klebstoff-Folie aufweisen, ist ein rückstandsfreies Lösen der Verklebung auch dann möglich, wenn der Winkel zwischen Verklebungsebene und Abzugsrichtung deutlich größer als 0° ist, insbesondere etwa 45° bis 135°, insbesondere 60° bis 100° beträgt.

Mit Hilfe des erfindungsgemäßen Hakens lassen sich die aus dem Stand der Technik bekannten Nachteile hervorragend vermeiden.

Da der Haken zumindest zweiteilig ist, kann die Blende einfach ausgetauscht werden, um den optischen Eindruck des Hakens zu verändern. Ein Austausch des unter der Adapterplatte befindlichen Klebstreifens ist nicht erforderlich.
In der Herstellung des Hakens braucht nun nur das Werkzeug für die Blende neu erstellt werden, wenn der Haken im Erscheinungsbild verändert werden soll.

Im folgenden sollen anhand mehrerer Figuren ein erfindungsgemäßer, besonders vorteilhaft gestalteter Haken näher dargelegt werden, ohne damit die Erfindung unnötig einschränken zu wollen.

Im einzelnen zeigen
- Figur 1: eine Ausführungsform des Hakens, bestehend aus Hakenkörper und Adapterplatte in seitlicher Ansicht,
- Figur 2: die Blende des Hakens nach Figur 1 im seitlichen Schnitt, und zwar längs der Linie A-A,
- Figur 3 und Figur 4: die Adapterplatte und die Blende einer alternativen Ausführungsform des Hakens im seitlichen Schnitt,
- Figur 5: in Ansicht von vorne die unterhalb der Blende aus Figur 4 vorhandene Adapterplatte,
- Figur 6 und Figur 7: die Adapterplatte und die Blende einer weiteren alternativen Ausführungsform des Hakens im seitlichen Schnitt,
- Figur 8 und Figur 9: zwei mögliche Ausführungsformen des Hakens nach den Figuren 6 und 7 sowie
- Figur 10: eine Basisplatte, die sich zwischen Wand und Adapterplatte befindet.

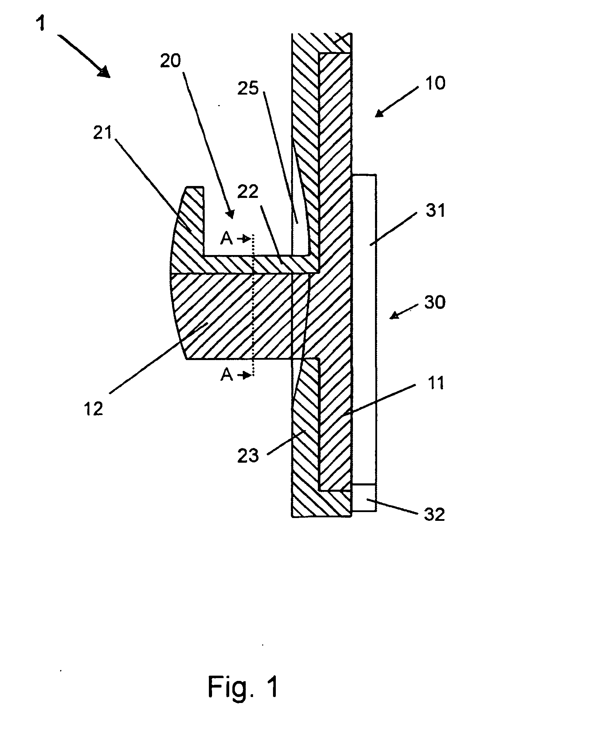

In der Figur 1 ist der erfindungsgemäße zumindest zweiteilige Haken 1 gezeigt. Der Haken 1 setzt sich zusammen aus einer Adapterplatte 10, die für die Verklebung mit einem auf Zug entklebenden Streifen 30 einer beidseitig klebenden Klebfolie so ausgebildet ist, daß ein Anfasser 32 des Klebstreifens 30 die Adapterplatte 10 überragt, und einem auf der Adapterplatte 10 befindlichen Hakenkörper 12, der auf der Adapterplatte 10 angesetzt ist. Auf die Adapterplatte 10 ist eine Blende 20 aufgesteckt, die die Adapterplatte 10 an allen Rändern überkragt, so daß von der Adapterplatte 10 lediglich der Hakenkörper 12 zu sehen ist.

Die Adapterplatte 10 besteht aus einer Grundplatte 11, die im wesentlichen rechteckig geformt ist. Auf der Grundplatte 11 ist mittig der Hakenkörper 12 angeformt. Der Hakenkörper 12 ist halbzylindrisch ausgeformt.

Die Blende 20 besteht ebenfalls im wesentlichen aus einer rechteckig geformten Platte 23, wobei an der Platte 23 im Randbereich ein Kragen 24 vorhanden ist, der sich über den gesamten Randbereich der Platte 23 erstreckt. Der Kragen 24 umgreift die Adapterplatte 10.
Des weiteren ist auf der Blende 20 ein zweiter Hakenkörper 22 vorhanden, der sich insbesondere mit dem Hakenkörper 12 auf der Adapterplatte 10 zu einem einzigen Haken ergänzt. Die beiden Hakenkörper 12, 22 liegen dabei formschlüssig aneinander.
Am zweiten Hakenkörper 22 ist eine Nase 21 angeformt, die sich senkrecht nach oben erstreckt. Die Nase 21 bietet einen baulichen Widerstand gegen das Abrutschen, wenn Dinge am Haken 1 angehängt werden.
In der Blende 20 ist um die Hakenkörper 12, 22 eine tellerförmige Vertiefung 25 vorhanden.

Die Blende 20 wird auf die Adapterplatte 10 aufgesteckt und deckt also die gesamte Adapterplatte 10 und darüber hinaus den Anfasser 32 des Klebstreifens 30 ab.

Der hinter der Adapterplatte 10 geklebte Klebstreifen 30 besteht aus einer beidseitig klebenden Klebfolie 31, an der ein Anfasser 32 vorhanden ist. Der Anfasser 32 des Klebstreifens 30 dient dazu, diesen durch Ziehen am Anfasser 32 in Längsrichtung zu dehnen, so daß sich die Klebkraft des Streifens 30 reduziert, was die Verbindung des Hakens 1 zur Wand rückstandsfrei löst. Der Haken 1 steht zur wiederholten Verklebung zur Verfügung.

Der Haken 1 wird an einer Wand angebracht, indem mittels des Klebestreifens 30 die Adapterplatte 10 an dieser fixiert wird. Mit der Adapterplatte 20 ist das Grundgerüst des Hakens 1 vorhanden. Die Blende 20 kann rein nach optischen Gesichtspunkten ausgesucht werden.

Wenn das Aussehen des Hakens verändert werden soll, wird einfach die Blende 20 durch eine ersetzt, die den neuen Ansprüchen entspricht, ohne daß die Verklebung des Hakens 1 mit der Wand gelöst werden muß.
Solange der Ort der Befestigung des Hakens 1 nicht verändert werden soll, ist stets ein Austausch der Blende 20 ausreichend, um einen veränderten Haken 1 hervorzurufen.

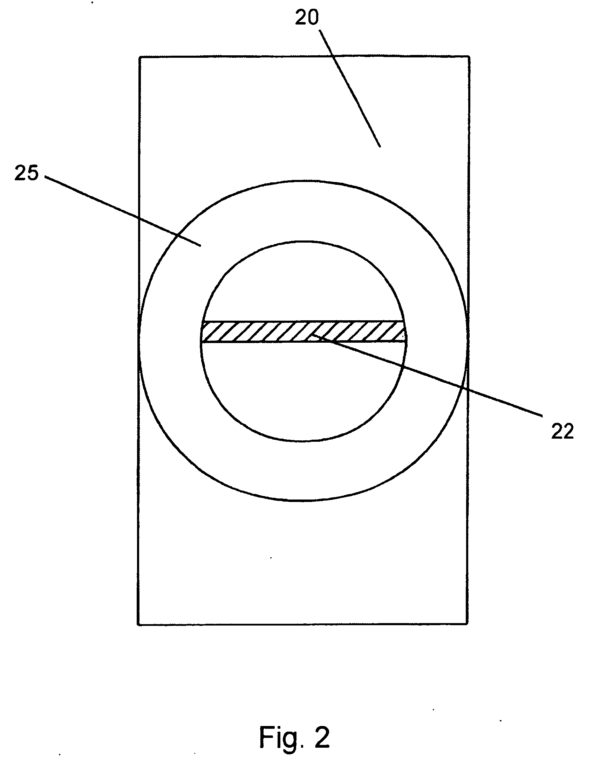

In der Figur 2 ist schließlich die Blende 20 im seitlichen Schnitt gezeigt, und zwar längs der Linie A-A.
Die tellerförmige Vertiefung 25 erstreckt sich über die gesamte Breite der Blende 20.

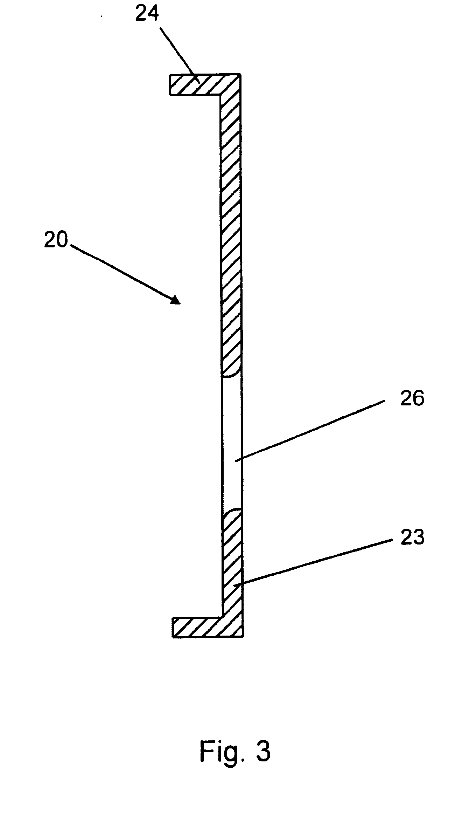

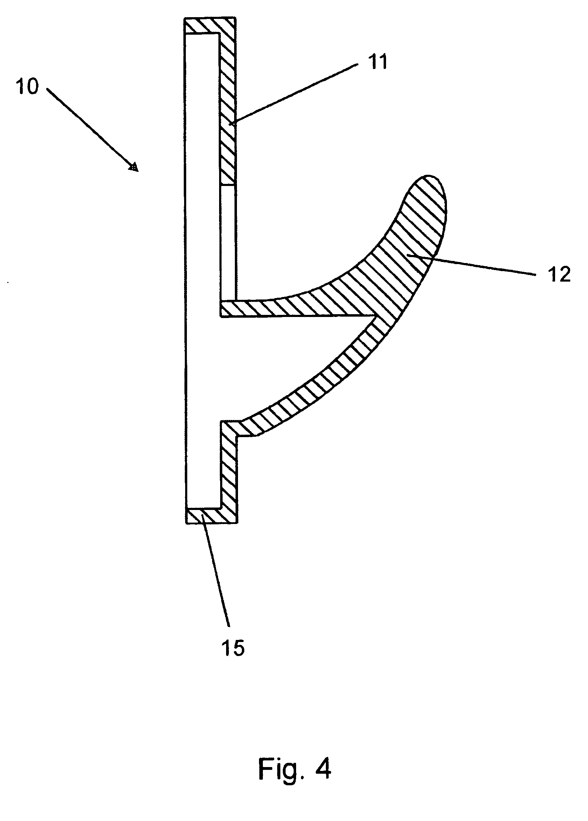

Die Figuren 3 und 4 zeigen die Adapterplatte 10 und die Blende 20 einer alternativen Ausführungsform des Hakens 1 im seitlichen Schnitt.
Die Blende 20 besteht aus einer echteckigen Platte 23, in der mittig ein im wesentlichen rechteckiger Ausschnitt 26 vorhanden ist. Die Blende 20 weist keinen zweiten Hakenkörper 22 auf.
Die Blende 20 wird auf die Adapterplatte 10 aufgesteckt, indem der Hakenkörper 12 der Adapterplatte 10 durch den Ausschnitt 26 geführt wird, bis die Blende 20 auf der Adapterplatte 10 aufliegt, so daß der Kragen 24 die Adapterplatte 10 wieder vollkommen umschließt.
Die Adapterplatte 10 weist einen Rahmen 15 auf.

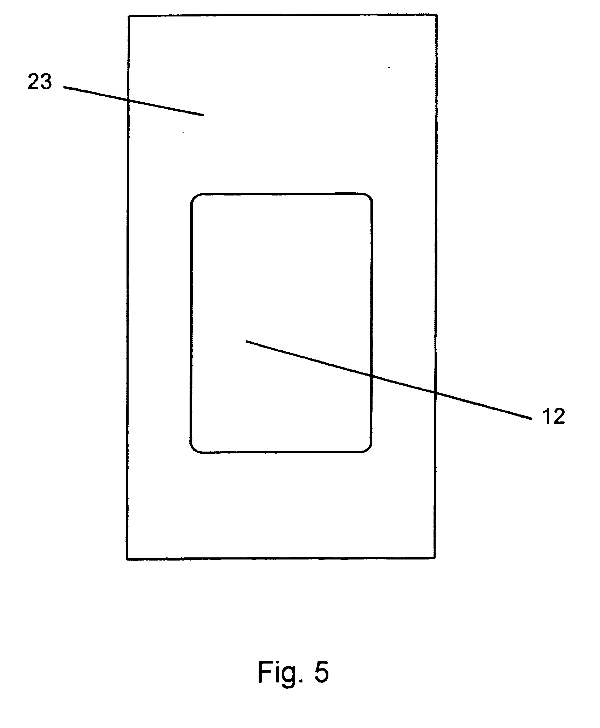

Die Figur 5 zeigt in Ansicht von vorne die unterhalb der Blende 20 vorhandene Adapterplatte 10.

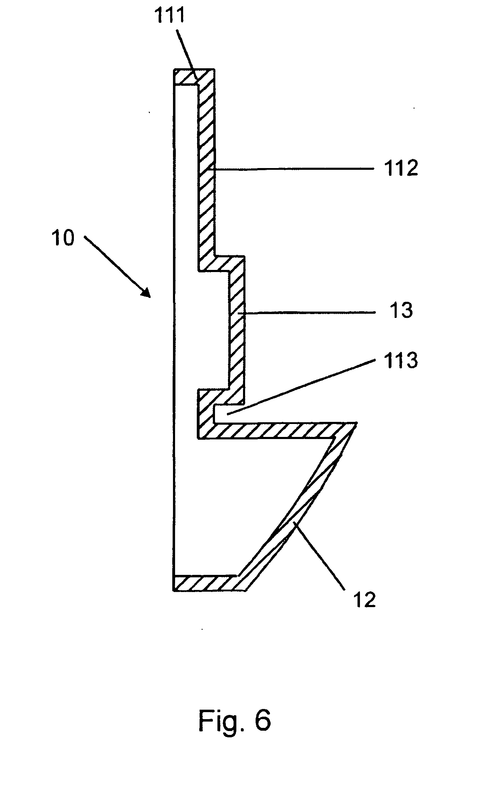

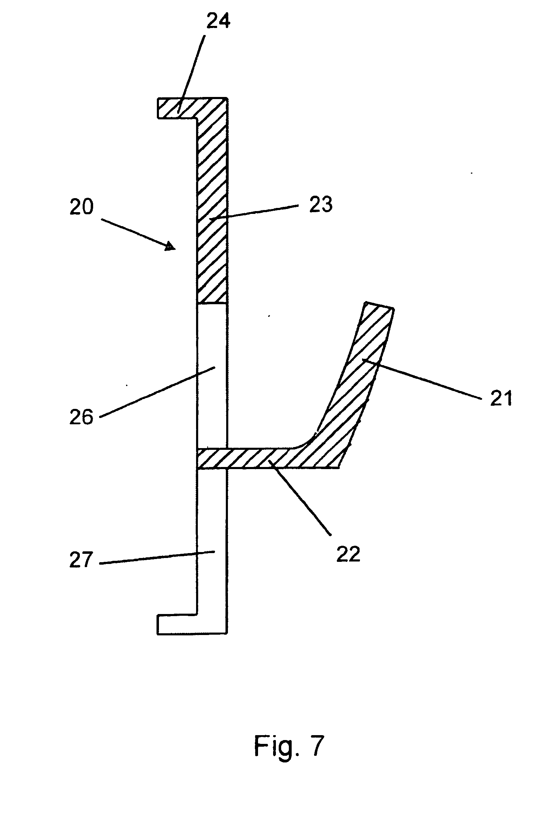

Die Figuren 6 und 7 zeigen die Adapterplatte 10 und die Blende 20 einer weiteren alternativen Ausführungsform des Hakens 1 im seitlichen Schnitt.
Die Blende 20 besteht wiederum aus einer rechteckigen Platte 23, in der mittig ein im wesentlichen rechteckiger Ausschnitt 26 vorhanden ist. Unterhalb des Ausschnitts 26 ist ein zweiter Hakenkörper 22 vorhanden, an dem eine Nase 21 angeformt ist, die sich in einer leicht gekrümmten Form nach oben erstreckt.

Unterhalb des Hakenkörpers 22 ist ein zweiter Ausschnitt 27 vorhanden, der die gleiche Breite aufweist wie der erste Ausschnitt 26.

Der zweite Ausschnitt 27 dient zur Aufnahme des Hakenkörpers 12 auf der Adapterplatte 10, der erste Ausschnitt 26 zur Aufnahme eines Vorsprungs 13 auf der Adapterplatte 10.

Die Adapterplatte 10 ist innen hohl ausgeführt. Die Adapterplatte 10 besteht aus einem rechteckigen Rahmen 111, der von einem Deckel 112 verschlossen ist. Auf dem Deckel 112 ist ein rechteckiger Vorsprung 13 vorhanden, der formschlüssig in die Blende 20 eingreift und somit die Blende 20 auf der Adapterplatte 10 sichert. Dieser Effekt wird durch einen spalt 113 zwischen Vorsprung 13 und Hakenkörper 12 verstärkt, in dem der zweite Hakenkörper 22 eingeklemmt wird. Der Hakenkörper 12 schließlich weist einen dreieckigen Querschnitt auf und endet im Rahmen 111.

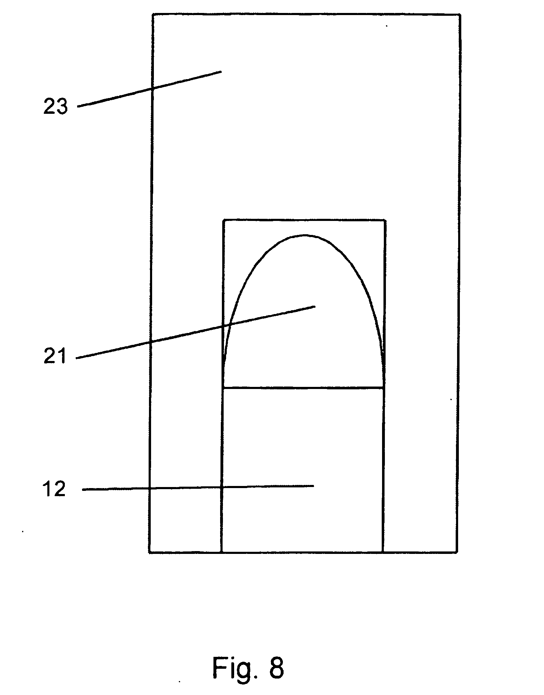

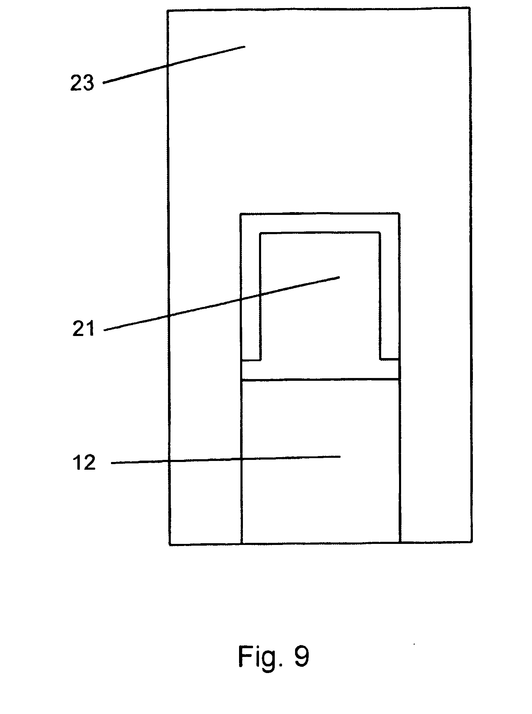

Figur 8 und Figur 9 zeigen zwei mögliche Ausführungsformen des Hakens nach den Figuren 6 und 7.

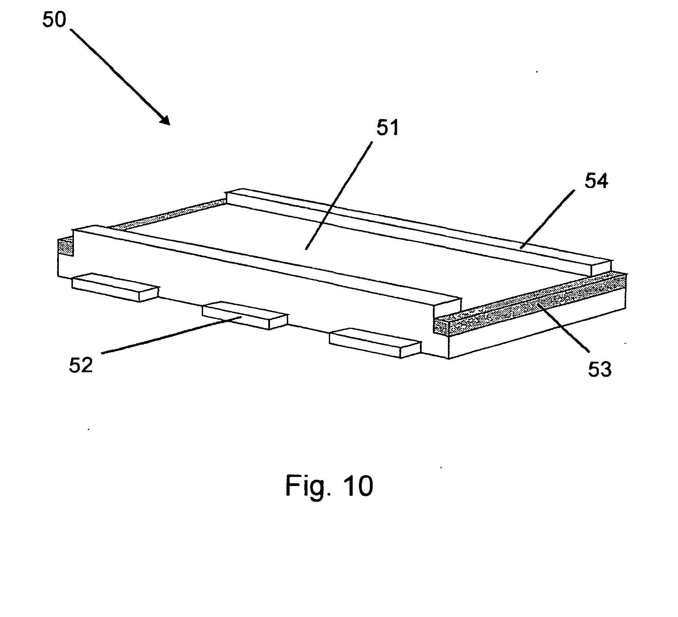

In der Figur 10 ist eine besonders vorteilhaft gestaltete Basisplatte 50 gezeigt. Seitlich sind an dieser Rast-Vorrichtungen 52 angeordnet, die in entsprechende Rast-Vorrichtungen der Adapterplatte einrasten können. Die Rückseite 51 der Basisplatte 50 dient dazu, den Klebfolien-Streifen aufzukleben.
Auf der Rückseite 51 der Basisplatte 50 sind zwei Bereiche 53 vorhanden, wobei an einem dieser der Anfasser des Klebfolien-Streifens anliegt. Die Bereiche 53 bestehen aus einem Material geringer Haft- und Gleitreibung gegenüber zahlreicher Haftklebemassen, hier aus Polyethylen hoher Dichte.
Da der Anwender die Basisplatte 50 mit dem Klebfolien-Streifen so bekleben kann, daß der Anfasser sowohl an dem einen als auch an dem anderen Ende überstehen kann, sind beide Bereiche 52 so ausgerüstet, daß diese Bereiche eine geringe Haft- und Gleitreibung beziehungsweise Adhäsion zu den verwendeten Klebstoff-Folien aufweisen.

Zusätzlich weist die Basisplatte 50 jedoch zu beiden Seiten der Rückseite 51 Abstandshalter 56 auf, ausgebildet als Stege, deren Höhe etwa die Hälfte der Dicke des aufzubringenden Klebfolien-Streifens beträgt, wobei der Abstand der Abstandshalter 56 so gewählt ist, daß der Klebfolien-Streifen mit seiner Breite leicht dazwischen plaziert werden kann.

## Patentansprüche

1. Zumindest zweiteiliger Haken (1) aus einer Adapterplatte (10), wobei auf die Adapterplatte (10) eine Blende (20) aufgesteckt ist, die die Adapterplatte (10) zumindest abschnittsweise abdeckt,
**dadurch gekennzeichnet, dass**
die Adapterplatte (10) für die Verklebung mit einem auf Zug entklebenden Streifen (30) einer beidseitig klebenden Klebfolie (31) so ausgebildet ist, dass ein Anfasser (32) des Klebstreifens (30) die Adapterplatte (10) überragt, und
sich auf der Adapterplatte (10) ein Hakenkörper (12) befindet, der auf der Adapterplatte (10) angesetzt ist.

2. Zumindest zweiteiliger Haken (1) nach Anspruch 1, **dadurch gekennzeichnet, dass**
die Blende (20) die gesamte Adapterplatte (10) und/oder den Anfasser (32) des Klebstreifens (30) abdeckt.

3. Zumindest zweiteiliger Haken (1) nach den Ansprüchen 1 und 2, **dadurch gekennzeichnet, dass**
auf der Blende (20) ein zweiter Hakenkörper (22) vorhanden ist, der sich vorzugsweise mit dem Hakenkörper (12) auf der Adapterplatte (10) zu einem einzigen Haken ergänzt.

4. Zumindest zweiteiliger Haken (1) nach den Ansprüchen 1 bis 3, **dadurch gekennzeichnet, dass**
die Adapterplatte (10) und/oder die Blende (20) aus Glas, Metall oder Kunststoff, vorzugsweise Polyethylenterephthalat, Polystyrol oder ABS, gefertigt sind.

5. Zumindest zweiteiliger Haken (1) nach den Ansprüchen 1 bis 4, **dadurch gekennzeichnet, dass**
die Adapterplatte (10) und/oder die Blende (20) transparent sind.

6. Zumindest zweiteiliger Haken (1) nach den Ansprüchen 1 bis 5, **dadurch gekennzeichnet, dass**
der Haken (1) einen hinter die Adapterplatte (10) geklebten Klebstreifen (30) aufweist.

7. Zumindest zweiteiliger Haken (1) nach den Ansprüchen 1 bis 6, **dadurch gekennzeichnet, dass**
die Adapterplatte (10) auf einer Basisplatte (50) aufgesteckt ist, wobei hinter der Basisplatte(50) der Klebstreifen (30) verklebt ist.

8. Kombination aus einem zumindest zweiteiligen Haken (1) nach zumindest einem der vorherigen Ansprüche und einem Klebstreifen. (30).

## Claims

1. At least two-part hook (1) composed of an adapter plate (10), a cover (20), which covers at least some sections of the adapter plate (10), being plugged onto said adapter plate (10), **characterized in that** the adapter plate (10), for adhesive bonding with a strip (30) of a double-sided adhesive film (31) whose bond can be broken by being pulled, is designed in such a way that a tab (32) of the adhesive strip (30) projects beyond the adapter plate (10), and a hook body (12) is located on the adapter plate (10) and placed on the adapter plate (10).

2. At least two-part hook (1) according to Claim 1, **characterized in that** the cover (20) covers the entire adapter plate (10) and/or the tab (32) of the adhesive strip (30).

3. At least two-part hook (1) according to Claims 1 and 2, **characterized in that** on the cover (20) there is a second hook (22) body, which preferably supplements the hook body (12) on the adapter plate (10) to form a single hook.

4. At least two-part hook (1) according to Claims 1 to 3, **characterized in that** the adapter plate (10) and/or the cover (20) are produced from glass, metal or plastic, preferably polyethylene terephthalate, polystyrene or ABS.

5. At least two-part hook (1) according to Claims 1 to 4, **characterized in that** the adapter plate (10) and/or the cover (20) are transparent.

6. At least two-part hook (1) according to Claims 1 to 5, **characterized in that** the hook (1) has an adhesive strip (30) adhesively bonded behind the adapter plate (10).

7. At least two-part hook (1) according to Claims 1 to 6, **characterized in that** the adapter plate (10) is plugged onto a base plate (50), the adhesive strip (30) being adhesively bonded behind the base plate (50).

8. Combination of an at least two-part hook (1) according to at least one of the preceding claims and an adhesive strip (30).

## Revendications

1. Crochet (1) en au moins deux pièces, constitué d'une plaque d'adaptation (10), un écran (20) qui recouvre au moins une partie de la plaque d'adaptation (10) étant placé sur la plaque d'adaptation (10), **caractérisé en ce que** la plaque d'adaptation (10) est configurée pour être collée sur un ruban (30) d'un film adhésif double face (31) qui peut être décollé par traction, une patte de saisie (32) du ruban adhésif (30) débordant de la plaque d'adaptation (10) et **en ce qu'**un corps de crochet (12) qui est placé sur la plaque d'adaptation (10) est situé sur la plaque d'adaptation (10).

2. Crochet (1) en au moins deux pièces selon la revendication 1, **caractérisé en ce que** l'écran (20) recouvre toute la plaque d'adaptation (10) et/ou la patte de saisie (32) du ruban adhésif (30).

3. Crochet (1) en au moins deux pièces selon les revendications 1 et 2, **caractérisé en ce qu'**un deuxième corps de crochet (22), qui de préférence forme un crochet unique avec le corps de crochet (12) prévu sur la plaque d'adaptation (10), est prévu sur l'écran (20).

4. Crochet (1) en au moins deux pièces selon les revendications 1 à 3, **caractérisé en ce que** la plaque d'adaptation (10) et/ou l'écran (20) sont réalisés en verre, en métal ou en matière synthétique, de préférence le poly(téréphtalate d'éthylène), le polystyrène ou l'ABS.

5. Crochet (1) en au moins deux pièces selon les revendications 1 à 4, **caractérisé en ce que** la plaque d'adaptation (10) et/ou l'écran (20) sont transparents.

6. Crochet (1) en au moins deux pièces selon les revendications 1 à 5, **caractérisé en ce que** le crochet (1) présente un ruban adhésif (30) collé derrière la plaque d'adaptation (10).

7. Crochet (1) en au moins deux pièces selon les revendications 1 à 6, **caractérisé en ce que** la plaque d'adaptation (10) est placée sur une plaque de base (50), le ruban adhésif (30) étant collé derrière la plaque de base (50).

8. Combinaison constituée d'un crochet (1) en au moins deux pièces selon au moins l'une quelconque des revendications précédentes, et d'un ruban adhésif (30).
